# EUROPEAN PATENT SPECIFICATION

(11) **EP 2 291 788 B1**
(45) Date of publication and mention of the grant of the patent: **23.03.2016**
(21) Application number: 09742930.2
(22) Date of filing: 30.04.2009
(51) Int. Cl.: G06Q 20/00, H04L 9/32, G06F 21/00

(54) **ELECTRONIC PAYMENTS IN A MOBILE COMMUNICATION SYSTEM**
ELEKTRONISCHE BEZAHLUNGEN IN EINEM MOBILKOMMUNIKATIONSSYSTEM
PAIEMENTS ÉLECTRONIQUES DANS UN SYSTÈME DE COMMUNICATION MOBILE

(30) Priority: 05.05.2008 SE 0800997
(43) Date of publication of application: 09.03.2011
(73) Proprietor: Paysystem Sweden Ab, 13107 Nacka (SE)
(72) Inventor: MOHSS, Anders, S-824 92 Hudiksvall (SE); SAMILS, Henrik, S-SE-753 22 Uppsala (SE)
(74) Representative: Brann AB
(86) International application number: PCT/SE2009/050466
(87) International publication number: WO 2009/136848

(56) References cited:
- WO-A1-03/015343
- WO-A1-03/096615
- WO-A1-03/096615
- GB-A- 2 372 867
- US-A1- 2006 019 634
- US-A1- 2006 019 634

## Description

### TECHNICAL FIELD

The present invention relates to methods and arrangements in a mobile telecommunication system. In particular it relates to methods and arrangements for secure transmission in the mobile telecommunication system.

### BACKGROUND

The development of mobile terminals has over the past years been very rapid and today's mobile terminals support many different services e.g. MMS (Multimedia Messaging Service) and video calls besides ordinary phone calls. To be able to support these services today's mobile terminals often have several different radio access technologies e.g. GSM (Global System for Mobile communications), UMTS (Universal Mobile Telecommunications System) and WiFi. The mobile terminals also have several different ways of transporting data over these radio access technologies e.g. WAP (Wireless Application Protocol) and TCP/IP (Transmission Control Protocol/Internet Protocol). Even if today's mobiles terminals have support for advanced services, have many different radio access technologies and support different protocols for transporting data there are still many mobile terminals sold that do not support data transmission. If a service provider wants to provide a service that can be used from all mobile terminals the service provider also has to consider the mobile terminals already sold and what capabilities they have. A service provider is therefore confronted with a problem how the service should be provided so that it can be used from so many mobile terminals as possible.

Over the latest years the use of cash when performing payments has been reduced significantly. Instead, people use credit cards when paying in the shops and different electronic payment solutions when paying on the Internet. One of the main problems with credit cards and other different electronic payment solutions is how to provide a secure solution. Matters that have been addressed before is for instance how to protect credit card numbers and other sensitive information when used on the Internet. As mentioned above today's mobile terminals also have data transmission capabilities which mean that they also can be used for Internet services, including different payments solutions. A further problem when using a mobile terminal in an electronic payment solutions is that the mobile terminal easily can be stolen or lost, which could lead to that sensitive information stored in the mobile terminal, like for instance credit card information, could be lost and used by a forger. Yet another problem when using a mobile terminal in an electronic payment solution is that information transmitted from the mobile terminal can be eavesdropped and used by a forger.

### SUMMARY

It is therefore an object of the present invention to provide an improved solution for electronic payments in a mobile telecommunication system for obviating at least some of the above mentioned problems. The inventive solution to this end intends to use an SMS-message encrypted with a public key in order to be able to perform payments and to verify a sender of the SMS-message. By using a public key for the encryption a more secure solution is provided since no private key needs to be stored in the mobile terminal. Another advantage achieved by using a public encryption key is that all mobile terminals can use the same public encryption key. An exchange of encryption keys is therefore not necessary before a SMS-message is sent from the mobile terminal.

According to a first aspect of the embodiments of the present invention, the above stated problem is solved by means of a method for enabling a mobile terminal to securely transmit data and a PIN-code (Personal Identification Number) to a server. The method comprises: storing the data and the PIN-code in a memory in the mobile terminal; creating a first bit sequence where different 8-bit combinations represent each character of the data and the PIN-code; encrypting the first bit sequence using a PKI, (Public Key Infrastructure) public-key to create a second bit sequence; creating a sequence of characters from the second bit sequence by using a Base64 encoder, where each character in the sequence of characters is represented by an 8-bit combination. The method further comprises erasing the data, the PIN-code and the first bit sequence from the memory; transposing each 8-bit character in the sequence of characters to a 7-bit character to create a third bit sequence and transmitting the third bit sequence using SMS to the server.

According to a second aspect of the embodiments of the present invention, the above stated problem is solved by means of a mobile terminal for secure transmission of data and a PIN-code to a server wherein the mobile terminal comprises; a memory for storing the data and the PIN-code in the mobile terminal; creating means for creating a first bit sequence where different 8-bit combinations represent each character of the data and the PIN-code; encryption means for encrypting the first bit sequence using a PKI public-key to create a second bit sequence. The mobile terminal further comprises creating means for creating a sequence of characters from the second bit sequence by using a Base64 encoder, where each character in the sequence of characters is represented by an 8-bit combination; erasing means for erasing the data, the PIN-code and the first bit sequence from the memory; transposing means for transposing each 8-bit character in the sequence of characters to a 7-bit character to create a third bit sequence and a transmitter (36) for transmitting the third bit sequence using SMS (Short Message Service) to the server.

According to a third aspect of the embodiments of the present invention, the above stated problem is solved by means of a method for enabling a server to decrypt data and a first PIN-code and to verify a sender of said data and said PIN-code. The method comprises: receiving in an SMS message a third bit sequence comprising a sequence characters, where each character is represented by a 7-bit combination; transposing each 7-bit character in the sequence of characters to an 8-bit character; creating a second bit sequence from the sequence of characters by using a Base64 decoder; retrieving a phone number from which the data and the PIN-code was sent and finding in the server a second PIN-code and a PKI private key associated with the phone-number; decrypting (205) the second bit sequence using the PKI private-key to create a first bit sequence. The method further comprises creating the data and the PIN-code from the first bit sequence, where each character in the PIN-code and the data is represented by an 8-bit combination and verifying the sender by comparing the first PIN-code and the second PIN-code.

According to a fourth aspect of the embodiments of the present invention, the above stated problem is solved by means of a server for decrypting data and a first PIN-code and for verifying a sender of the data and the PIN-code, wherein the server comprises: a receiver for receiving in an SMS message a third bit sequence comprising a sequence of characters, where each character is represented by a 7-bit combination; transposing means for transposing each 7-bit character in the sequence of characters to an 8-bit character; creating means for creating a second bit sequence from the sequence of characters by using a Base64 decoder; retrieving means for retrieving a phone number from which the data and the PIN-code was sent and finding in the server a second PIN-code and a PKI private key associated with the phone-number. The method further comprises decrypting means for decrypting the second bit sequence using the PKI private-key to create a first bit sequence; creating means for creating the data and the PIN-code from the first bit sequence, where each character in the PIN-code and the data is represented by an 8-bit combination and verifying means for verifying the sender by comparing the first PIN-code and the second PIN-code.

### BRIEF DESCRIPTION OF THE DRAWINGS

**Fig. 1** illustrates a method according to embodiments of the present invention.
**Fig. 2** illustrates a method according to embodiments of the present invention.
**Fig. 3** schematically illustrates a mobile terminal according to embodiments of the present invention.
**Fig. 4** schematically illustrates a server according to embodiments of the present invention.

### DETAILED DESCRIPTION

The foregoing and other objects, features and advantages of the invention will be apparent from the following detailed description of preferred embodiments.

The present invention sets forth methods and arrangements for performing payments in a mobile telecommunications system. The basic idea of the present invention is to utilize the fact that almost every mobile terminal supports SMS transmission which means that a payment solution provided via SMS can be used from almost every mobile terminal. The present invention also utilizes that sensitive information should be minimized in the mobile terminal and if the sensitive information is inserted in the mobile terminal the sensitive information should be erased from the mobile terminal after being used in the payment solution. Sensitive information should also be encrypted when transmitted from the mobile terminal. This would not only mean a payment solution that could be used from almost every mobile terminal but it will also facilitate a secure solution that prevents the sensitive information from being lost or eavesdropped and used by a forger.

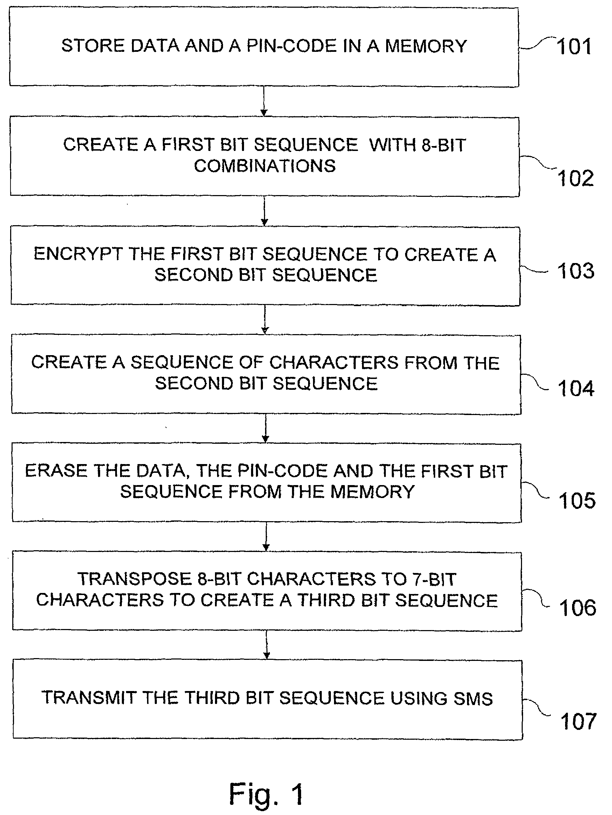

Referring to figure 1, one aspect of the present invention relates to a method, which is illustrated by a flow chart in figure 1, for enabling a mobile terminal to securely transmit data and PIN-code to a server. The server can for instance be a server used in an electronic payment solution. The data and the PIN-code can be used for an economic transaction or an identification of a user. The economic transaction may for instance imply that money is being transferred from one bank account to another bank account or a payment for a specific item identified by the data. Initially, a user of the mobile terminal enters the data and the PIN-code in the mobile terminal. In step 101, the data and the PIN-code are stored in a memory in the mobile terminal. If the data relates to, for instance an economic transaction, where money should be transferred from one subscriber to another subscriber the data may comprise a phone number to a receiver of the money, and a sum e.g. 100 indicating that the amount 100 should be transferred from an account associated with the user to an account associated with the receiver of the money. In the next step 102, a first bit sequence is created from the data and the PIN-code where each character in the data and the PIN-code is represented by different 8-bit combinations. If the data and the PIN-code for instance comprise 22 characters the first bit sequence will be 176 bits long. The data and the PIN-code have now been transformed to the first bit sequence in step 102. In step 103 the first bit sequence is encrypted using a PKI public-key to create a second bit sequence. Encryption in step 103 may be accomplished by using RSA up to 1024-bit encryption. According to one embodiment of the invention the second bit sequence is created with a maximum length of 1280 bits in step 103. Next in step 104, a sequence of characters is created from the second bit sequence by using a base 64 encoder, where each character is represented by an 8-bit combination. To ensure that no sensitive information is left in the memory after the method has been accomplished the data, the PIN-code and the first bit sequence are erased from the memory in step 105. To be able to send the sequence of characters by using SMS each character in the sequence of characters is transposed from 8-bit characters to 7-bit characters to create a third bit sequence. Finally the third bit sequence is transmitted to the server using SMS in step 107. The third bit sequence may be transmitted in several separate SMS-messages.

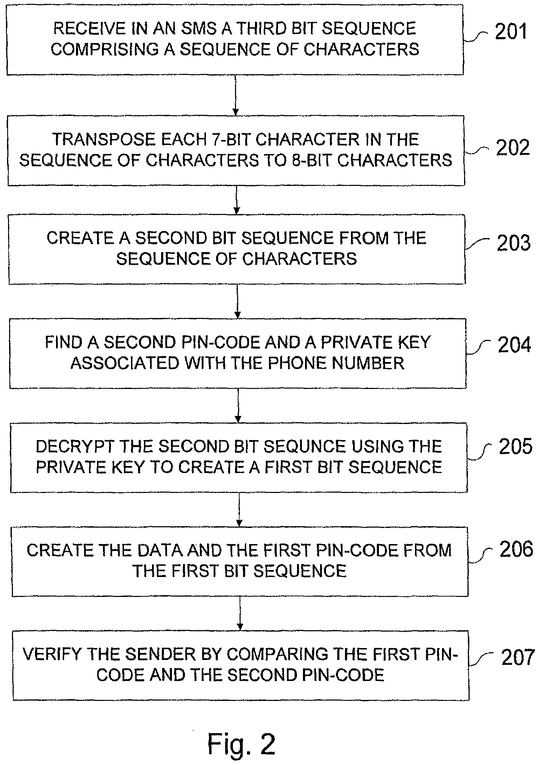

Another aspect of the present invention relates to a method, fig. 2, for enabling a server to decrypt data and a first PIN-code and to verify a sender of the data and the first PIN-code. The server can for instance be a server in an electronic payment solution. The electronic payment solution may comprise an economic transaction which may imply that money is being transferred from one bank account to another bank account or a payment for a specific item specified by the data. In the first step 201, a third bit sequence comprising a sequence of characters is received in an SMS message. Each character in the sequence is represented by a 7-bit combination. Next, in the step 202, each 7-bit character in said sequence of characters is transposed to an 8-bit character. In the step 203 a second bit sequence is created from the sequence of characters by using a Base64 decoder. In step 204, a phone number from which said data and said first PIN-code were sent is retrieved from said server. Step 204 further comprises finding, in said server, a second PIN-code and a PKI private key associated with said phone-number. The PKI private key is used in step 205 to decrypt the second bit sequence to create a first bit sequence. From the first bit sequence, the data and the first PIN-code are created in step 206, where each character in the data and the first PIN-code is represented by an 8-bit combination. Finally the sender is verified in step 207 by comparing the first PIN-code and the second PIN-code.

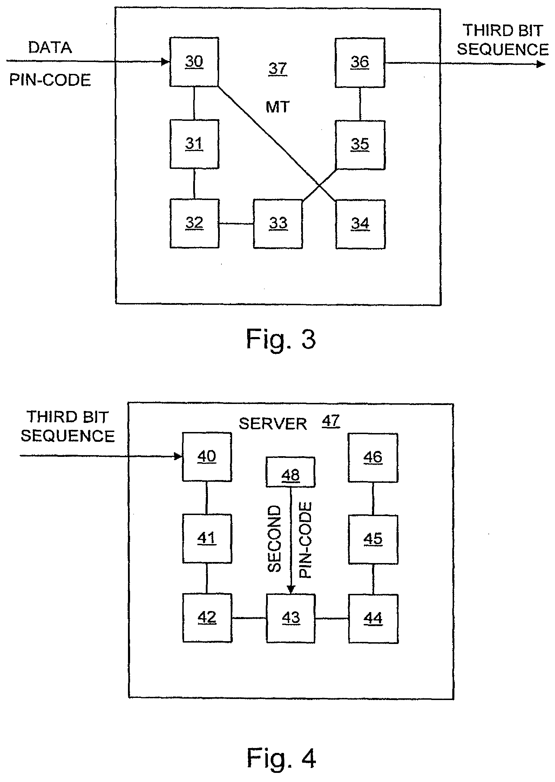

Yet another aspect of the present invention relates to a mobile terminal 37 for secure transmission of data and a PIN-code to a server. The mobile terminal 37, is illustrated in figure 3. The server may be a server in an electronic payment solution. A memory is 30 is provided in the mobile terminal 37 for storing the data and the PIN-code in the mobile terminal. Creating means 31 is also provided in the mobile terminal 37 for creating a first bit sequence where different 8-bit combinations represent each character of the data and the PIN-code. In addition the mobile terminal 37 further comprises encryption means 32 for encrypting the first bit sequence using a PKI public-key to create a second bit sequence. The encryption means may be further configured for creating the second bit sequence with a maximum length of 1280 bits. According to other embodiments of the invention the encryption means may also be further configured for encrypting using RSA up to 1024-bit encryption. The mobile terminal 37 further comprises creating means 33 for creating a sequence of characters from the second bit sequence by using a Base64 encoder, where each character in the sequence of characters is represented by an 8-bit combination.

The mobile terminal 37 also comprises erasing means 34 for erasing the data, the PIN-code and the first bit sequence from the memory means 30 and transposing means for transposing each 8-bit character in the sequence of characters to a 7-bit character to create a third bit sequence. Finally, transmitting means 36 in the mobile terminal 37 is provided for transmitting the third bit sequence using SMS to the server. The third bit sequence may be transmitted in several separate SMS-messages by the transmitting means 36.

Referring to figure 4, another aspect of the present invention relates to a server for decrypting data and a first PIN-code and for verifying a sender of the data and the first PIN-code. The server may be a server in an electronic payment solution. The server 47 comprises receiver means 40 for receiving in an SMS message a third bit sequence comprising a sequence of characters, where each character is represented by a 7-bit combination. The server 47 comprises further transposing means 41 for transposing each 7-bit character in said sequence of characters to an 8-bit character and creating means 42 in the server is provided for creating a second bit sequence from said sequence of characters by using a Base64 decoder. In addition, retrieving means 43 is provided in the server 47 for retrieving from a memory 48 a phone number from which the data and the PIN-code was sent. The retrieving means 43 is also configured to find in said memory 48 a second PIN-code and a PKI private key associated with the phone-number in the server. The server 47 also comprises decrypting means 44 for decrypting the second bit sequence using the PKI private-key to create a first bit sequence. In order to create the data and the first PIN-code from the first bit sequence the creating means 45 is also provided in the server 47, where each character in the PIN-code and the data is represented by an 8-bit combination. Finally, the server comprises verifying means 46 in the server for verifying the sender by comparing the first PIN-code and the second PIN-code.

The means mentioned in the present description can be software means, hardware means or a combination of both. The described subject matter is of course not limited to the above described and in the drawings shown embodiments, but can be codified within the scope of the enclosed claims.

## Claims

1. A method for enabling a mobile terminal to securely transmit data and a Personal Identification Number-code, PIN-code, to a server, the method comprises;
- storing (101) the data and the PIN-code in a memory in the mobile terminal;
- creating (102) a first bit sequence where different 8-bit combinations represent each character of said data and said PIN-code;
- encrypting (103) said first bit sequence using a Public Key Infrastructure public-key, PKI public-key, to create a second bit sequence;
- creating (104) a sequence of characters from said second bit sequence by using a Base64 encoder, where each character in the sequence of characters is represented by an 8-bit combination.
- erasing (105) the data, the PIN-code and the first bit sequence from the memory;
- transposing (106) each 8-bit character in said sequence of characters to a 7-bit character to create a third bit sequence; and
- transmitting (107) said third bit sequence using Short Message Service, SMS, to the server.

2. A method according to claim 1, wherein said step of encrypting further comprises creating said second bit sequence with a maximum length of 1280 bits.

3. A method according to any of previous claims, wherein said step of encrypting is accomplished by using RSA up to 1024-bit encryption.

4. A method according to any of previous claims, wherein said step of transmitting using SMS, further comprises transmitting said third bit sequence in several separate SMS-messages.

5. A method according to any of previous claims, wherein said data is used for an economic transaction or an identification of a user.

6. A method according to any of previous claims, wherein said server is a server in an electronic payment solution.

7. A method for enabling a server to decrypt data and a first Personal Identification Number-code, PIN-code, and to verify a sender of said data and said first PIN-code the method comprises;
- receiving (201) in an Short Message Service message, SMS-message, a third bit sequence comprising a sequence characters, where each character is represented by a 7-bit combination;
- transposing (202) each 7-bit character in said sequence of characters to an 8-bit character;
- creating (203) a second bit sequence from said sequence of characters by using a Base64 decoder;
- retrieving (204) a phone number from which said data and said PIN-code was sent and finding in said server a second PIN-code and a Public Key Infrastructure private key, PKI private key, associated with said phone-number;
- decrypting (205) said second bit sequence using said PKI private-key to create a first bit sequence;
- creating (206) said data and said PIN-code from said first bit sequence, where each character in said PIN-code and said data is represented by an 8-bit combination; and
- verifying (207) the sender by comparing the first PIN-code and the second PIN-code.

8. A method according to claim 7, wherein said server is a server in an electronic payment solution.

9. A method according to any to claims 7 and 8, wherein said data is used for an economic transaction.

10. A mobile terminal (37) for secure transmission of data and a Personal Identification Number-code, PIN-code, to a server wherein said mobile terminal comprises;
a memory (30) for storing the data and the PIN-code in the mobile terminal; creating means (31) for creating a first bit sequence where different 8-bit combinations represent each character of said data and said PIN-code;
encryption means (32) for encrypting said first bit sequence using a Public Key Infrastructure public-key, PKI public-key, to create a second bit sequence;
creating means (33) for creating a sequence of characters from said second bit sequence by using a Base64 encoder, where each character in the sequence of characters is represented by an 8-bit combination.
erasing means (34) for erasing the data, the PIN-code and the first bit sequence from the memory;
transposing means (35) for transposing each 8-bit character in said sequence of characters to a 7-bit character to create a third bit sequence; and
a transmitter (36) for transmitting said third bit sequence using Short Message Service, SMS, to the server.

11. A mobile terminal (37) according to claim 10, wherein said encryption means is further configured for creating said second bit sequence with a maximum length of 1280 bits.

12. A mobile terminal according to claims 10 or 11, wherein said encryption means is further configured for encrypting using RSA up to 1024-bit encryption.

13. A mobile terminal according to any of claims 9 to 12, wherein said server is a server in an electronic payment solution.

14. A server (47) for decrypting data and a first Personal Identification Number code, PIN-code, and for verifying a sender of said data and said first PIN-code, wherein said server comprises;
a receiver (40) for receiving in an Short Message Service message, SMS-message, a third bit sequence comprising a sequence of characters, where each character is represented by a 7-bit combination;
transposing means (41) for transposing each 7-bit character in said sequence of characters to an 8-bit character;
creating means (42) for creating a second bit sequence from said sequence of characters by using a Base64 decoder;
retrieving means (43) for retrieving a phone number from which said data and said first PIN-code was sent and finding a second PIN-code and a Public Key Infrastructure private key, PKI private key, associated with said phone-number;
decrypting means (44) for decrypting said second bit sequence using said PKI private-key to create a first bit sequence;
creating means (45) for creating said data and said first PIN-code from said first bit sequence, where each character in said PIN-code and said data is represented by an 8-bit combination; and
verifying means (46) for verifying the sender by comparing the first PIN-code and the second PIN-code.

15. A server according to claim 14, wherein said server is a server in an electronic payment solution.

16. A server according to claim 14 or 15, wherein said data is used for an economic transaction.

## Patentansprüche

1. Verfahren zum Befähigen eines mobilen Endgeräts, Daten und einen Persönlichen Identifikationszahlencode, PIN-Code, sicher an einen Server zu senden, wobei das Verfahren Folgendes umfasst;
- Speichern (101) der Daten und des PIN-Codes in einem Speicher im mobilen Endgerät;
- Erzeugen (102) einer ersten Bitfolge, wobei verschiedene 8-Bit-Kombinationen jedes Zeichen der Daten und des PIN-Codes darstellen;
- Verschlüsseln (103) der ersten Bitfolge mithilfe eines öffentlichen Schlüssels einer Public-Key-Infrastruktur, öffentlicher PKI-Schlüssel, um eine zweite Bitfolge zu erzeugen;
- Erzeugen (104) einer Folge von Zeichen aus der zweiten Bitfolge unter Verwendung eines Base64-Kodierers, wobei jedes Zeichen in der Zeichenfolge von einer 8-Bit-Kombination dargestellt wird.
- Löschen (105) der Daten, des PIN-Codes und der ersten Bitfolge aus dem Speicher;
- Umwandeln (106) jedes 8-Bit-Zeichens in der Zeichenfolge in ein 7-Bit-Zeichen, um eine dritte Bitfolge zu erzeugen; und
- Senden (107) der dritten Bitfolge mithilfe des Short Message Service, SMS, an den Server.

2. Verfahren nach Anspruch 1, wobei der Schritt des Verschlüsselns ferner das Erzeugen der zweiten Bitfolge mit einer maximalen Länge von 1.280 Bit umfasst.

3. Verfahren nach einem der vorangegangenen Ansprüche, wobei der Schritt des Verschlüsselns mittels RSA-Verschlüsselung von bis zu 1.024 Bit erfolgt.

4. Verfahren nach einem der vorangegangenen Ansprüche, wobei der Schritt des Sendens mithilfe von SMS ferner das Senden der dritten Bitfolge in mehreren separaten SMS-Nachrichten umfasst.

5. Verfahren nach einem der vorangegangenen Ansprüche, wobei die Daten für eine wirtschaftliche Transaktion oder eine Identifikation eines Nutzers verwendet werden.

6. Verfahren nach einem der vorangegangenen Ansprüche, wobei der Server ein Server in einer elektronischen Zahlungslösung ist.

7. Verfahren zum Befähigen eines Servers, Daten und einen ersten Persönlichen Identifikationszahlencode, PIN-Code, zu entschlüsseln und einen Absender der Daten und des ersten PIN-Codes zu prüfen, wobei das Verfahren Folgendes umfasst;
- Empfangen (201) in einer Short Message Service-Nachricht, SMS-Nachricht, einer dritten Bitfolge, die eine Zeichenfolge umfasst, wobei jedes Zeichen von einer 7-Bit-Kombination dargestellt wird;
- Umwandeln (202) jedes 7-Bit-Zeichens in der Zeichenfolge in ein 8-Bit-Zeichen;
- Erzeugen (203) einer zweiten Bitfolge aus der Zeichenfolge mithilfe eines Base64-Dekodiereres;
- Wiederherstellen (204) einer Telefonnummer, von der aus die Daten und der PIN-Code gesendet wurden und Finden eines zweiten PIN-Codes und eines privaten Schlüssels für die Public-Key-Infrastruktur, privater PKI-Schlüssel, die zu der Telefonnummer gehören;
- Entschlüsseln (205) der zweiten Bitfolge mithilfe des privaten PKI-Schlüssels, um eine erste Bitfolge zu erzeugen;
- Erzeugen (206) der Daten und des PIN-Codes aus der ersten Bitfolge, wobei jedes Zeichen im PIN-Code und in den Daten von einer 8-Bit-Kombination dargestellt wird; und
- Prüfen (207) des Absenders durch Vergleichen des ersten PIN-Codes mit dem zweiten PIN-Code.

8. Verfahren nach Anspruch 7, wobei der Server ein Server in einer elektronischen Zahlungslösung ist.

9. Verfahren nach einem der Ansprüche 7 oder 8, wobei die Daten für eine wirtschaftliche Transaktion verwendet werden.

10. Mobiles Endgerät (37) für das sichere Senden von Daten und eines Persönlichen Identifikationszahlencodes, PIN-Code, an einen Server, wobei das mobile Endgerät Folgendes umfasst;
einen Speicher (30) zum Speichern der Daten und des PIN-Codes im mobilen Endgerät;
Erzeugungsmittel (31) zum Erzeugen einer ersten Bitfolge, wobei verschiedene 8-Bit-Kombinationen jedes Zeichen der Daten und des PIN-Codes darstellen;
Verschlüsselungsmittel (32) zum Verschlüsseln der ersten Bitfolge mithilfe eines öffentlichen Schlüssels für die Public-Key-Infrastruktur, öffentlicher PKI-Schlüssel, um eine zweite Bitfolge zu erzeugen;
Erzeugungsmittel (33) zum Erzeugen einer Zeichenfolge aus der zweiten Bitfolge mithilfe eines Base64-Kodierers, wobei jedes Zeichen in der Zeichenfolge von einer 8-Bit-Kombination dargestellt wird;
Löschmittel (34) zum Löschen der Daten, des PIN-Codes und der ersten Bitfolge aus dem Speicher;
Umwandlungsmittel (35) zum Umwandeln jedes 8-Bit-Zeichens in der Zeichenfolge in ein 7-Bit-Zeichen, um eine dritte Bitfolge zu erzeugen; und
einen Sender (36) zum Senden der dritten Bitfolge mithilfe des Short Message Service, SMS, an den Server.

11. Mobiles Endgerät (37) nach Anspruch 10, wobei das Verschlüsselungsmittel ferner zum Erzeugen einer zweiten Bitfolge mit einer maximalen Länge von 1.280 Bit konfiguriert ist.

12. Mobiles Endgerät nach einem der Ansprüche 10 oder 11, wobei das Verschlüsselungsmittel ferner für die Verschlüsselung mittels RSA-Verschlüsselung von bis zu 1.024 Bit konfiguriert ist.

13. Mobiles Endgerät nach einem der Ansprüche 9 bis 12, wobei der Server ein Server in einer elektronischen Zahlungslösung ist.

14. Server (47) zum Entschlüsseln von Daten und eines ersten Persönlichen Identifikationszahlencodes, PIN-Code, und zum Prüfen eines Absenders der Daten und des ersten PIN-Codes, wobei der Server Folgendes umfasst;
einen Empfänger (40) zum Empfangen in einer Short Message Service-Nachricht, SMS-Nachricht, einer dritten Bitfolge, die eine Zeichenfolge umfasst, wobei jedes Zeichen durch eine 7-Bit-Kombination dargestellt wird;
Umwandlungsmittel (41) zum Umwandeln jedes 7-Bit-Zeichens in der Zeichenfolge in ein 8-Bit-Zeichen;
Erzeugungsmittel (42) zum Erzeugen einer zweiten Bitfolge aus der Zeichenfolge mithilfe eines Base64-Dekodierers;
Wiederherstellungsmittel (43) zum Wiederherstellen einer Telefonnummer, von der aus die Daten und der erste PIN-Code gesendet wurden und Finden eines zweiten PIN-Codes und eines privaten Schlüssels für die Public-Key-Infrastruktur, privater PKI-Schlüssel, der zu der Telefonnummer gehört;
Entschlüsselungsmittel (44) zum Entschlüsseln der zweiten Bitfolge mithilfe des privaten PKI-Schlüssels, um eine erste Bitfolge zu erzeugen:
Erzeugungsmittel (45) zum Erzeugen der Daten und des ersten PIN-Codes aus der ersten Bitfolge, wobei jedes Zeichen im PIN-Code und in den Daten durch eine 8-Bit-Kombination dargestellt wird; und
Prüfmittel (46) zum Prüfen des Absenders durch Vergleichen des ersten PIN-Codes mit dem zweiten PIN-Code.

15. Server nach Anspruch 14, wobei der Server ein Server in einer elektronischen Zahlungslösung ist.

16. Server nach einem der Ansprüche 14 oder 15, wobei die Daten für eine wirtschaftliche Transaktion verwendet werden.

## Revendications

1. Procédé permettant à un terminal mobile de transmettre de façon sécurisée des données et un code de numéro d'identification personnel, code PIN, à un serveur, le procédé comprend :
- le stockage (101) des données et du code PIN dans une mémoire dans le terminal mobile ;
- la création (102) d'une première séquence de bits où différentes combinaisons de 8 bits représentent chaque caractère desdites données et dudit code PIN ;
- le cryptage (103) de ladite première séquence de bits en utilisant une clé publique d'infrastructure à clé publique, clé publique PKI, pour créer une deuxième séquence de bits ;
- la création (104) d'une séquence de caractères à partir de ladite deuxième séquence de bits en utilisant un encodeur Base64, où chaque caractère dans la séquence de caractères est représenté par une combinaison de 8 bits,
- l'effacement (105) des données, du code PIN et de la première séquence de bits de la mémoire ;
- la transposition (106) de chaque caractère de 8 bits dans ladite séquence de caractères en un caractère de 7 bits pour créer une troisième séquence de bits ; et
- la transmission (107) de ladite troisième séquence de bits en utilisant le service de message court, SMS, au serveur.

2. Procédé selon la revendication 1, dans lequel ladite étape de cryptage comprend en outre la création de ladite deuxième séquence de bits avec une longueur maximale de 1 280 bits.

3. Procédé selon une quelconque revendication précédente, dans lequel ladite étape de cryptage est accomplie en utilisant le RSA jusqu'à un cryptage de 1 024 bits.

4. Procédé selon une quelconque revendication précédente, dans lequel ladite étape de transmission en utilisant un SMS, comprend en outre la transmission de ladite troisième séquence de bits dans plusieurs messages SMS séparés.

5. Procédé selon une quelconque revendication précédente, dans lequel lesdites données sont utilisées pour une transaction économique ou une identification d'un utilisateur.

6. Procédé selon une quelconque revendication précédente, dans lequel ledit serveur est un serveur dans une solution de paiement électronique.

7. Procédé permettant à un serveur de décrypter des données et un premier code de numéro d'identification personnel, code PIN, et de vérifier un expéditeur desdites données et dudit premier code PIN, le procédé comprend :
- la réception (201) dans un message de service de message court, message SMS, d'une troisième séquence de bits comprenant une séquence de caractères, où chaque caractère est représenté par une combinaison de 7 bits ;
- la transposition (202) de chaque caractère de 7 bits dans ladite séquence de caractères en un caractère de 8 bits ;
- la création (203) d'une deuxième séquence de bits à partir de ladite séquence de caractères en utilisant un décodeur Base64 ;
- la récupération (204) d'un numéro de téléphone à partir duquel lesdites données et ledit code PIN ont été envoyés et la découverte dans ledit serveur d'un second code PIN et d'une clé privée d'infrastructure à clé publique, clé privée PKI, associée audit numéro de téléphone ;
- le décryptage (205) de ladite deuxième séquence de bits en utilisant ladite clé privée PKI pour créer une première séquence de bits ;
- la création (206) desdites données et dudit code PIN à partir de ladite première séquence de bits, où chaque caractère dans ledit code PIN et lesdites données est représenté par une combinaison de 8 bits ; et
- la vérification (207) de l'expéditeur en comparant le premier code PIN et le second code PIN.

8. Procédé selon la revendication 7, dans lequel ledit serveur est un serveur dans une solution de paiement électronique.

9. Procédé selon l'une quelconque des revendications 7 et 8, dans lequel lesdites données sont utilisées pour une transaction économique.

10. Terminal mobile (37) pour une transmission sécurisée de données et d'un code de numéro d'identification personnel, code PIN, à un serveur, dans lequel ledit terminal mobile comprend :
- une mémoire (30) destinée à stocker les données et le code PIN dans le terminal mobile ;
- un moyen de création (31) destiné à créer une première séquence de bits où différentes combinaisons de 8 bits représentent chaque caractère desdites données et dudit code PIN ;
- un moyen de cryptage (32) destiné à crypter ladite première séquence de bits en utilisant une clé publique d'infrastructure à clé publique, clé publique PKI, pour créer une deuxième séquence de bits ;
- un moyen de création (33) destiné à créer une séquence de caractères à partir de ladite deuxième séquence de bits en utilisant un encodeur Base64, où chaque caractère dans la séquence de caractères est représenté par une combinaison de 8 bits.
- un moyen d'effacement (34) destiné à effacer les données, le code PIN et la première séquence de bits de la mémoire ;
- un moyen de transposition (35) destiné à transposer chaque caractère de 8 bits dans ladite séquence de caractères en un caractère de 7 bits pour créer une troisième séquence de bits ; et
- un émetteur (36) destiné à transmettre ladite troisième séquence de bits en utilisant le service de message court, SMS, au serveur.

11. Terminal mobile (37) selon la revendication 10, dans lequel ledit moyen de cryptage est en outre configuré pour créer ladite deuxième séquence de bits avec une longueur maximale de 1 280 bits.

12. Terminal mobile selon les revendications 10 ou 11, dans lequel ledit moyen de cryptage est en outre configuré pour un cryptage en utilisant le RSA jusqu'à un cryptage de 1 024 bits.

13. Terminal mobile selon l'une quelconque des revendications 9 à 12, dans lequel ledit serveur est un serveur dans une solution de paiement électronique.

14. Serveur (47) destiné à décrypter des données et un premier code de numéro d'identification personnel, code PIN, et à vérifier un expéditeur desdites données et dudit premier code PIN, dans lequel ledit serveur comprend :
un récepteur (40) destiné à recevoir un message de service de message court, message SMS, une troisième séquence de bits comprenant une séquence de caractères, où chaque caractère est représenté par une combinaison de 7 bits ;
un moyen de transposition (41) destiné à transposer chaque caractère de 7 bits dans ladite séquence de caractères en un caractère de 8 bits ;
un moyen de création (42) destiné à créer une deuxième séquence de bits à partir de ladite séquence de caractères en utilisant un décodeur Base64 ;
un moyen de récupération (43) destiné à récupérer un numéro de téléphone à partir duquel lesdites données et ledit premier code PIN ont été envoyés et à découvrir un second code PIN et une clé privée d'infrastructure à clé publique, clé privée PKI, associée audit numéro de téléphone ;
- un moyen de décryptage (44) destiné à décrypter ladite deuxième séquence de bits en utilisant ladite clé privée PKI pour créer une première séquence de bits ;
- un moyen de création (45) destiné à créer lesdites données et ledit premier code PIN à partir de ladite première séquence de bits, où chaque caractère dans ledit code PIN et lesdites données est représenté par une combinaison de 8 bits ; et
- un moyen de vérification (46) destiné à vérifier l'expéditeur en comparant le premier code PIN et le second code PIN.

15. Serveur selon la revendication 14, dans lequel ledit serveur est un serveur dans une solution de paiement électronique.

16. Serveur selon la revendication 14 ou 15, dans lequel lesdites données sont utilisées pour une transaction économique.
